# EUROPÄISCHE PATENTSCHRIFT

(11) **EP 0 523 204 B1**
(45) Veröffentlichungstag und Bekanntmachung des Hinweises auf die Patenterteilung: **12.04.1995**
(21) Anmeldenummer: 92902958.5
(22) Anmeldetag: 30.01.1992
(51) Int. Cl.: B60R 13/10

(54) **ANORDNUNG ZUR KENNZEICHNUNG VON KRAFTFAHRZEUGEN**
DEVICE FOR MARKING MOTOR VEHICLES
DISPOSITIF D'IDENTIFICATION DE VEHICULES A MOTEUR

(30) Priorität: 04.02.1991 DE 4103267
(43) Veröffentlichungstag der Anmeldung: 20.01.1993
(73) Patentinhaber: HOFMANN, Wilhelm Heinrich, D-61250 Usingen (DE)
(72) Erfinder: HOFMANN, Wilhelm Heinrich, D-61250 Usingen (DE)
(74) Vertreter: Meier, Robert, Dipl.-Ing.
(86) Internationale Anmeldenummer: EP9200195
(87) Internationale Veröffentlichungsnummer: WO9213737

(56) Entgegenhaltungen:
- GB-A- 2 217 885
- US-A- 4 805 722
- PATENT ABSTRACTS OF JAPAN vol. 13, no. 458 (M-880)(3806) 17. Oktober 1989 & JP-A- 1 178 049 (Masazumi Murai) 14 July 1989
- PATENT ABSTRACTS OF JAPAN vol. 11, no. 146 (M-587)(2593) 13. Mai 1987 & JP-A- 61 282 148 (Honjin K.K.) 12 December 1986

## Beschreibung

Die Erfindung bezieht sich auf eine Anordnung zur Kennzeichnung, zentralen Registrierung sowie Überprüfung von Kraftfahrzeugen mit wenigstens einem elektronischen Kennzeichnungsschild, welches mit dem Kraftfahrzeug in mechanisch fester Verbindung steht und welches an einen Bord-Computer im Kraftfahrzeug mit einem Leser für Datenträger angeschlossen ist, deren Codierung zur Ein-und Ausschaltung zumindest der elektronischen Kennzeichnungsschilder einsetzbar ist.

Bisher werden zur Kennzeichnung eines Kraftfahrzeuges in der Regel Kennzeichnungsschilder aus Blech verwendet, welche die Kennzeichnung in Form von eingepreßten Ziffern und/oder Buchstaben tragen. Derartige Kennzeichnungsschilder können an Personenkraftwagen, Motorrädern, Lastkraftwagen oder anderen Straßenfahrzeugen angebracht werden.

Die Größe und die Anordnung der Schilder am jeweiligen Kraftfahrzeug sind vorgeschrieben. Ebenso sind nach nationalen Gesetzen und Verordnungen die Art der Ziffern und der Buchstaben, die Farbgebung dieser Kennzeichnungen sowie des Untergrundes festgelegt. Vorschrift ist auch, daß Kraftfahrzeuge zusätzlich Kennzeichnungen für die Nationalität des Zulassungslandes tragen müssen.

Zur weiteren Identifizierung von Kraftfahrzeugen sind ein Kraftfahrzeugbrief und ein Kraftfahrzeugschein notwendig. Während die Kennzeichnungsschilder nur Ziffern und/oder Buchstaben tragen, die insgesamt eine rasche Identifizierung des Halters ermöglichen, führen sie auch zu weiteren Daten über das Kraftfahrzeug, die bei der zuständigen Polizei, der Zulassungsstelle oder in einer Zentrale - in der Bundesrepublik beispielsweise in Flensburg - gespeichert sind.

Derartige umfangreiche Erfassungen von Kraftfahrzeugen werden in allen Ländern mehr oder weniger gleich gehandhabt.

Zweifelsfrei ist diese Erfassung von Kraftfahrzeugen aufwendig und umständlich. Die aus Blech bestehenden Schilder müssen hergestellt werden, wozu auch das Einbringen der Ziffern bzw. Buchstaben, die Farbgebung und vielfach auch die Beschichtung mit einer reflektierenden Schicht gehören. Da insbesondere die Beschichtung der Schilder auf chemischem Wege erfolgt, fallen bisher in den entsprechenden Herstellungsstätten umweltfeindliche Abwässer an. Nachteilig bei den bisherigen Kennzeichen ist weiterhin, daß sie relativ leicht von Unbefugten hergestellt und ausgewechselt werden können.

Für die weitere Registrierung der wesentlichen Daten des Kraftfahrzeuhalters und des Kraftfahrzeuges selbst ist ein beträchtlicher Aufwand erforderlich. Die Kraftfahrzeugbriefe bzw. die Kraftfahrzeugzulassungsscheine müssen zudem hergestellt und mit allen notwendigen Daten versehen werden. Diese Daten müssen neuerdings auch in Computern gespeichert werden. Hierbei ist aucheine sorgfältige Koordinierung der Herstellung der Kennzeichen und der Eintragung der Daten in den Kraftfahrzeugbrief und den Kraftfahrzeugschein erforderlich. Zusätzlich müssen Möglichkeiten zur Registrierung eines Besitzerwechsels bzw. der Stillegung von Kraftfahrzeugen offengelassen werden.

Aus der GB-A-22 17 885 ist bekannt, codierte Magnetkarten zu verwenden, die für einen in einem Kraftfahrzeug installierten Bord-Computer vorgesehen sind. Bei Durchzug der Magnetkarte durch die Leseeinheit des Bord-Computers werden elektronische Kennzeichnungsschilder mit Flüssigkeits-(LED-)Anzeige und zusätzlich die Zündung für den Fahrzeugmotor blockiert bzw. in Funktion gesetzt. Eine Verbindung zwischen dem durch die Magnet- karte betätigten Bord-Computer mit beispielsweise einem Zentral-Computer und einer Zulassungsstelle besteht dabei nicht.

Desweiteren ist aus der US-PS 4,805,722 ein Anti-Diebstahlsystem für ein Motorfahrzeug bekannt, bei dem ebenfalls eine codierte Magnetkarte verwendet wird, um über einen Steuer-Computer die Zündung und Benzinzufuhr zu blockieren oder zu aktivieren und bei unberechtigtem Zugriff auf das Fahrzeug dessen Motorhaube zu verriegeln. Die Verbindung dieses Systems mit einer zentralen Erfassungsstelle ist auch hier nicht vorgesehen.

Dem gegenüber liegt der Erfindung die Aufgabe zugrunde, die Kennzeichnung, zentrale Registrierung sowie die Überprüfung von Kraftfahrzeugen an die modernen elektronischen Kennzeichnungs- und Registrierungsmöglichkeiten anzupassen und dadurch auch die Möglichkeit von Mißbrauch in hohem Maße zu erschweren.

Gelöst wird diese Aufgabe dadurch, daß der Datenträger außer als Schaltelement zugleich als Bestandteil eines Kraftfahrzeug-Registriersystems bestehend aus miteinander in Wirkverbindung stehenden Zentral-Computer, Zulassungsstellen-Computer und/oder Kontroll-Computer in Streifenwagen sowie dem Bord-Computer in dem Kraftfahrzeug verwendbar ist und innerhalb dieses Systems in Übereinstimmung mit den Daten des Kraftfahrzeuges nach Art eines Kraftfahrzeugbriefes oder Kraftfahrzeugscheines erstellbar, lesbar, abwandelbar und registrierbar ist.

Diese Anordnung ist die Grundlage für eine neue Mißbrauch geschützte Kennzeichnung von Kraftfahrzeugen.

Sie arbeitet mit einem ersten Datenträger, der zusätzliche Speicherplätze zur Aufnahme von Codierungen für Kenndaten für eine "berechtigte Person" sowie eines Aktivierungsbefehls zur Vollaktivierung wenigstens eines der elektronischen Kennzeichnungsschilder einschließt. Die "berechtigte Person" kann auch ein Beamter einer Behörde bzw. der Zulassungsstelle sein.

Durch einen zweiten Datenträger, der zusätzlich zu den Speicherplätzen des ersten Datenträgers Speicherplätze zur Aufnahme von Codierungen für wenigstens ein Erkennungssignal z.B. zum Einschalten eines Bordcomputers im Kraftfahrzeug einschließt, kann die elektronische Anlage im Kraftfahrzeug voll eingeschaltet werden.

In Verbindung mit der erfindungsgemäßen Anordnung können weitere Datenträger zum Einsatz kommen. Durch einen dritten Datenträger, der außer Speicherplätzen zur Aufnahme der Codierungen für Kenndaten für die "berechtigte Person" aufweist, können zusätzliche Speicherplätze zur Aufnahme von Codierungen für Befehle zur Löschung von Anzeigefeldern auf den Kennzeichnungsschildern einschließen. Zusätzlich kann der erste Datenträger Speicherplätze zur Aufnahme von Codierungen für Kontrolldaten, z.B. HU-(Haupt- untersuchung) und/oder ASU (Abgassonderuntersuchung) anzeigen und/oder zum Schalten entsprechender Anzeigeelemente auf den elektronischen Kennzeichenschildern bzw. von Anzeigegeräten im oder am Kraftfahrzeug aufweisen. Schließlich kann ein vierter Datenträger vorgesehen sein, der außer Speicherplätzen zur Aufnahme von Codierungen für Daten für die "berechtigte Person" Speicherplätze zur Aufnahme von Codierungen für Befehle wenigstens.

zur Teillöschung des Bord-Computers und/oder des Zentralcomputers bzw . des Zulassungsstellencomputers einschließt.

Erfindungsgemäß können beliebige Datenträger eingesetzt werden. Es hat sich jedoch herausgestellt, daß sich Vorteile ergeben, wenn als Datenträger Magnetkarten verwendet werden.

Im einzelnen werden auf die erste Magnet- Karte alle Fahrzeug-Daten, die von dem Hersteller durch den seitherigen Kraftfahrzeugbrief vorgegeben sind, wie z.B.: Hersteller, Fahrgestell Nr., amtliches Kennzeichen, Fahrtnummer, Schlüsselnummer, sowie ASU, HU bzw. TÜV-(Technischer Über- wachungsverein)-Untersuchungen übertragen.

Wird einem Fahrzeug das amtliche Kennzeichen zugeordnet, so werden die Daten und die Identität auf dem Datenträger codiert und abgespeichert. Diese Codierung auf dem Datenträger wird dann von der"berechtigten Person" zum Einschalten der Kennzeichen verwendet. Danach wandert diese Karte dann entweder in die hierfür vorgesehene Kartei in der Zulassungsstelle und der Kfz.Halter erhält einen Datenträger ohne diese Codierung nur mit den Fahrzeugdaten oder dergl. oder, in Sonderfällen, erhält der Halter des Kraftfahrzeuges den kompletten Datenträger.

Erfindungsgemäß sind der Bord-Computer, der Zentral-Computer bzw. der Zulassungsstellencomputer und die zugehörigen Kartenleser so geschaltet, daß durch einen gegenüber den gespeicherten Daten falsch codierten Datenträger in den Computern Alarm ausgelöst wird. Die Kartenleser sind bei Verwendung von Magnetkarten als Datenträger als Magnetkartendurchgangsleserausgebildet. Läßt der Kraftfahrzeughalter oder die "berechtigte Person" die Magnetkarte 1 durch den Kartenleser des Bord- computers laufen, so schalten sich die elektronischen Kennzeichnungsschilder ein für den Fall, daß der Datenträger (Magnet-Karte) zu dem Kraftfahrzeug passt. Das Kraftfahrzeug ist dann fahrbereit.

Der Bord-Computer des Kraftfahrzeuges kann wahlweise an ein 220V-Netz und/oder an eine Batteriespannung anschließbar sein.

Die Kennzeichnungsschilder weisen Anzeigefelder auf, für die Flüssig. keitskristall- bzw. LED-Elemente verwendet werden.

Bord-Computer und Karten-Leser sind fest mit Bestandteilen des Inneren des Kraftfahrzeuges verbunden.

Jedes Kennzeichnungsschild besteht innerhalb eines Gehäuses aus einer LED-Platte aus Kunststoff, die hinterseitig schwarz getönt und vorderseitig klarsichtig sowie blank und spiegelfrei ausgebildet ist.Jedes Kennzeichenschild schließt LED-Elemente und diese außer den Ziffern 0 - 9 und de Buchstaben A - Z auch Sonderkennzeichnungen z.B. chinesische oder japanische Schriftzeichen oder dergl. ein.

Die neuen elektronischen Kennzeichnungsschilder entsprechen in der Größe bisherigen Kraftfahrzeugkennzeichenschildern mit einer Länge von 520 mm einer Höhe von 110 mm und einer Dicke von etwa 20 - 25 mm. Sie können aber auch in anderen Größen verwendet werden.

Zentral-Computer und Zulassungsstellencomputer sind über Leitungen und/oder Funkstrecken oder dergl. miteinander gekoppelt.

Zu der erfindungsgemäßen Anordnung kann auch ein Kontrollcomputer mit einem Monitor gehören, der beispielsweise von Streifenwagen der Polizei mitgeführt wird. Dieser Kontrollcomputer wird täglich, beispielsweise durch Kopplung mit einem Zulassungscomputer oder einem Polizei-Computer mit allen neuen Daten über gestohlene Fahrzeuge oder Personenfahndungen versorgt. Auf dem Monitor kann der Inhalt eines Datenträgers, z.B. einer Magnetkarte, optisch lesbar dargestellt werden, wodurch sich die Polizeifahndung in vielen Fällen erfolgreich unterstützen läßt. Diese Fahndungsmethode ist weniger aufwendig und umständlich, als eine bisherige Personenkontrolle.

Mit der Erfindung ist es möglich, bleibende Kennzeichen bzw. Dauerkennzeichen für Kraftfahrzeuge aller Art zur Verfügung zu stellen, die mit dem Bord-Computer und über diesen mit einem Datenträger in Schalt bzw. Wirkverbindung stehen. Infolgedessen lassen sich die Kennzeichen nicht gegen andere auswechseln, wie das bei bisherigen Kennzeichen möglich ist. Die Kennzeichen begleiten das Kraftfahrzeug auf Lebenszeit. Selbst wenn die Kennzeichen an einem anderen Kraftfahrzeug installiert würden, wären Sie nicht funktionsfähig, da sie über den jeweiligen Bord-Computer mit den zugehörigen Datenträgern, vorzugsweise den Magnetkarten, angesteuert werden müssen. Die Kennzeichen sind deshalb praktisch fälschungssicher.

Dabei ist auch ein weitaus besserer Schutz gegen Diebstahl gegeben, als bisher.

Die meisten Bestandteile der Anordnung, z. B. Bord-Computer, Zulassungsstellen- und Zentral-Computer, Controll-Computer mit Monitor, Datenträger, vorzugsweise Magnetkarten und Magnetkartenleser, sowie Verbindungsschaltungen zwischen den Computern, sind an sich bekannt. Derartige Einzelelemente sind nicht Gegenstand der vorliegenden Erfindung.

Von Vorteil ist, daß die neuen Kennzeichenschilder aus an sich bekannten Einzelelementen bestehen. Die Herstellung dieser neuen Kennzeichen- schilder belastet die Umwelt weit weniger, als die Herstellung bisheriger Kennzeichenschilder mit ihrer gesundheitsschädlichen Farbgebung. Dabei unterliegen die neuen Kennzeichenschilder keiner farblichen Verblassung. Von besonderer Bedeutung ist aber, daß die erfindungsgemäße Anordnung eine schnelle Registrierung und Überprüfung von Kraftfahrzeugen und deren "berechtigten Personen" möglich macht.

Ausführungsbeispiele der Erfindung werden nachfolgend anhand der Zeichnung erläutert.

Es zeigt:
Fig. 1 ein Kraftfahrzeug mit einer schematischen Darstellung von Einzelheiten der Anordnung,
Fig. 2 einen Bord-Computer,
Fig. 3 einen Stromversorgungsteil,
Fig. 4 ein Kennzeichenschild,
Fig. 5a die Kopplung eines Zulassungsstellen-Computers mit einem Zentral-Computer,
Fig. 5b einen Bord-Computer,
Fig. 5c einen Kontroll-Computer
Fig. 6a ein erstes Ausführungsbeispiel einer Magnetkarte,
Fig. 6b ein zweites Ausführungsbeispiel einer Magnetkarte,
Fig. 7 ein drittes Ausführungsbeispiel einer Magnetkarte,
Fig. 8 die Vorderseite einer ersten Magnet- karte,
Fig. 9 die Rückseite der Magnetkarte nach Fig. 8,
Fig. 10 die Vorderseite einer zweiten Magnetkarte,
Fig. 11 die Rückseite der Magnetkarte nach Fig. 10,
Fig. 12 die Vorderseite einer dritten Magnet- karte,
Fig. 13 die Rückseite der Magnetkarte nach Fig. 12,
Fig. 14 die Vorderseite einer vierten Magnet- karte und
Fig. 15 die Rückseite der Magnetkarte nach Fig. 14.

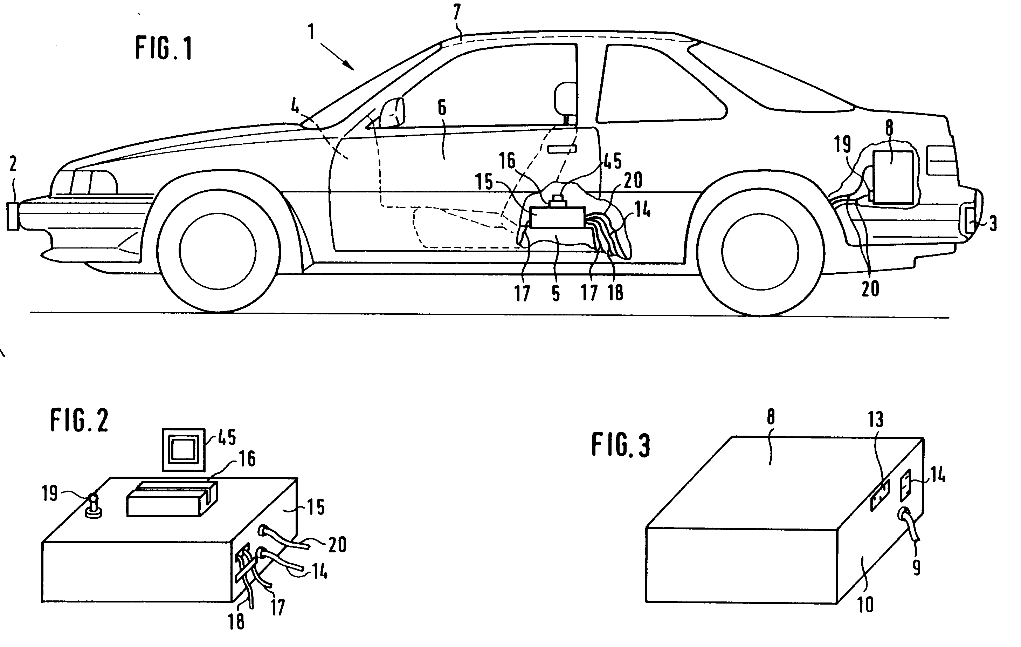

Fig. 1 zeigt schematisch ein Kraftfahrzeug beliebiger Bauart, dessen Einzelteile nicht Gegenstand der Erfindung sind und die deshalb auch nicht erläutert werden.

Auf eine später erläuterte Weise besitzt das Kraftfahrzeug elektronische Anzeige-Kennzeichen, die durch einen Datenträger, beispielsweise einer Magnetkarte aktiviert werden.

An dem Kraftfahrzeug 1 ist ein vorderes elektronisches Kennzeichenschild 2 und ein hinteres elektronisches Kennzeichenschild 3 angeordnet. Über eine nicht dargestellte Verkabelung des Kraftfahrzeuges steht die erfindungsgemäße Anordnung mit einem Stromversorgungsteil 8 in Schaltverbindung, der beispielsweise im Heck des Kraftfahrzeuges und vorzugsweise im Kofferraum angeordnet sein kann. Das Stromversorgungsteil 8 weist einen Batterieanschluß 9 sowie einen nur schematisch angedeuteten Fremdspannungsanschluß 10 auf. Das Stromversorgungsteil 8 speist nicht nur die beiden elektronischen Kennzeichenschilder 2 und 3, sondern auch einen Bord-Computer 15, der im dargestellten Ausführungsbeispiel auf derrMittelkonsole 5 des Kraftfahrzeuges angeordnet ist. Ohne am Kern der Erfindung etwas zu ändern, kann der Bord-Computer 15 auch hinter dem Armaturenbrett 4, in einer Tür 6 oder an anderer Stelle innerhalb des Kraftfahrzeuges angeordnet sein.

Der Bord-Computer 15 ist im dargestellten Ausführungsbeispiel mit einem Durchzugsleser 16 für Magnetkarten 45 elektrisch verbunden. Der Durchzugsleser 16 kann innerhalb des Kraftfahrzeuges an einer bequem zugänglichen Stelle, beispielsweise auch in Reichweite für den Fahrer unterhalb des Kraftfahrzeugdaches 7 angeordnet sein.

Die Fig. 1, 2 und 3 zeigen, daß das Stromversorgungsteil 8 einen Stromversorgungsanschluß 13 für die Hintergrundbeleuchtung der weiter unten im einzelnen erläuterten elektronischen Kennzeichenschilder 2 bzw. 3 sowie eine Kaltgerätedose 14 aufweist und daß auch der Bord-Computer 15 mit einer Kaltgeräte-Dose 14 versehen ist. Mit 17 und 18 sind in Fig. 2 Versorgungskabel für das vordere bzw. hintere elektronische Kennzeichen- schild bezeichnet. Der Bord-Computer 15 ist weiter mit einem Schalter 19 für Notstromversorgung versehen. Vom Bord-Computer 15 zweigt weiterhin ein Stromversorgungskabel 20 für die Hintergrundbeleuchtung der elektronischen Kennzeichenschilder 2 und 3 ab.

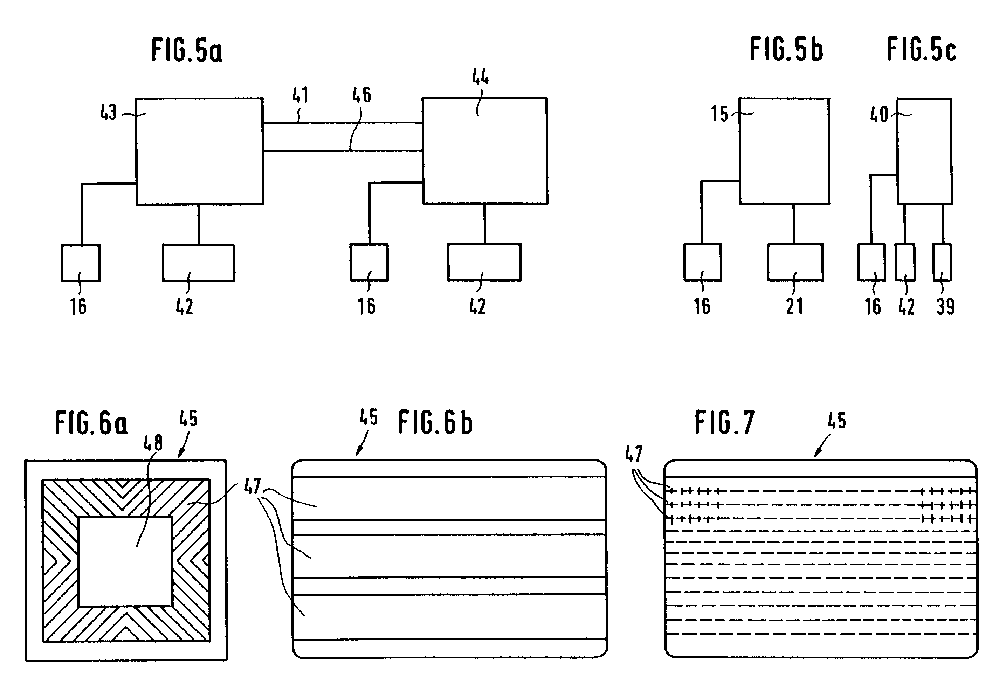

Wie die Fig. 5 erkennen läßt, ist der Bord- Computer 15 außer mit dem Durchzugsleser 16 zusätzlichmmit einer Eingabetastatur 21 versehen, die der Übersicht wegen in den Fig. 1 bis 3 nicht dargestellt ist.

Die zuvor aufgeführten Einzelelemente der Anordnung sind in den Fig. 1 bis 3 nur beispielsweise dargestellt. Je nach Fahrzeugtyp kann es notwendig sein, auch eine andere Anordnung dieser Elemente zu bevorzugen. Wie bereits erwähnt, kann das Stromversorgungsteil 8 sowohl von der normalen Kraftfahrzeugbatterie in Verbindung mit einer Fremdspannung betrieben werden. Ohne am Kern der Erfindung etwas zu ändern ist es jedoch auch möglich, eine besondere Stromversorgung - beispielsweise in einem Lastkraftwagen - für die erfindungsgemäße Anordnung einzusetzen.

Das Stromversorgungsteil 8 kann - falls erforderlich - auch mit einer üblichen Batterieverpufferung ausgerüstet sein.

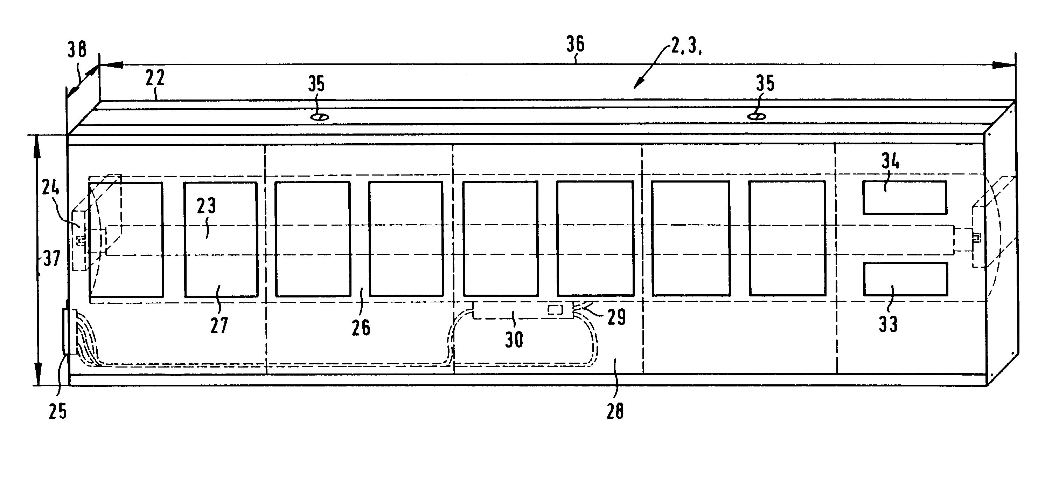

In Fig. 4 ist schematisch ein vorderes bzw. hinteres elektronisches Kennzeichenschild 2, 3 dargestellt. Seine Länge 36, seine Höhe 37 und seine Dicke 38 entsprechen üblichen Maßen von Kennzeichenschildern. So beträgt die Länge etwa 520 mm, die Höhe etwa 110 mm und die Dicke etwa 20 bis 25 mm. In einem entsprechend ausgebildeten Gehäuse 22 ist eine Leuchtröhre 23 mit einem Reflektor 26 erkennbar, die zur Hintergrundbeleuchtung des elektronischen Kennzeichen schildes 2, 3 dient. Die Leuchtröhre 23 sitzt in Leuchtröhrenfassungen 24 und ist über einen an sich bekannten Anschlußstecker 25 mit dem Stromversorgungsanschluß 20 der Hintergrundbeleuchtung am Bord-Computer 15 verbunden. Im in Fig. 4 dargestellten Ausführungsbeispiel weist ein elektronisches Kennzeichen- schild 2, 3 acht Anzeigefelder 27 auf, mit denen es möglich ist, beispielsweise alle in der Bundesrepublik üblichen Ziffern und Buchstabenwerte, die für Kennzeichenschilder im Gebrauch sind, darzustellen. Das in Fig. 4 dargestellte Kennzeichenschild ist nur ein Beispiel. Erfindungsgemäß ist es möglich, alle beispielsweise in unterschiedlichen Ländern üblichen Kennzeichenschilder nach den gültigen Vorschriften für Kraftfahrzeugkennzeichen herzustellen.

Nach der Erfindung können beispielsweise zwei Anzeigefelder 27 jeweils zu einem Modul 28 zusammengefaßt werden. Diese Module erleichtern die Verkabelung 29. Innerhalb jeden Kennzeichenschildes ist ein Starter 30 vorgesehen, durch welchen aufgrund des auf einer Magnetkarte bzw. einem Datenträger angeordneten Signal ein Kennzeichenschild aktiviert wird.

Von Vorteil ist, daß ein Kennzeichenschild 2, 3 auch mit einer sog. HU-Anzeige 33, einer ASU-Anzeige 34 versehen werden kann. Diese Anzeigen können auf eine später erläuterte Weise durch besondere Datenträger, vorzugsweise Magnetkarten aktiviert werden.

Die elektronischen Kraftfahrzeugschilder können auf beliebige Weise mit dem Kraftfahrzeug verbunden werden. Im in Fig. 4 dargestellten Ausführungsbeispiel werden Halteschrauben 35 eingesetzt. Für die Anzeigefelder 27 können Flüssigkeitskristallanzeigen eingesetzt werden. Anzeigeschilder oder Anzeigetafeln in unterschiedlichen Integrationsstufen bis zu betriebsfähigen Systemen sind seit langem bekannt. Auch die Aussteuerung von Baugruppen von Modulen sind erhältlich. Die Kennzeichnungsschilder können über serielle Schnittstellen betrieben werden. Die zum autarken Betrieb benötigte Soft- und Hardware lassen sich speziell für den vorliegenden Anwendungsfall erstellen. Die Kennzeichenschilder können mit integrierten Treibern - ICs - einbaugerecht konfektioniert und gerahmt in jeder gängigen Größe hergestellt und bereitgestellt werden. Zur Beleuchtung können handelsübliche Leuchtstofflampen mit Helligkeitsregulierung eingesetzt werden. Zur Ansteurung lassen sich Mikraprozessoren und Zeichengeneratoren unter Einschluß serieller Schnittstellen einsetzen. Als Schrift kann Flüssigkeitskristallschrift, beispielsweise mit 114 Elementen pro Zeichen eingesetzt werden. Auch die Farbgebung der Anzeigefelder ist nach Wunsch lieferbar.

Fig. 5 zeigt in vereinfachter schematischer Darstellung einen Zulassungsstellen-Computer, einen Zentral-Computer, einen Bord-Computer und einen Kontroll-Computer sowie ihre Zusammenschaltung. Ein Zentral-Computer 43 ist mit einem Durchzugsleser 16 für Magnetkarten und einer Eingabetastatur 42 verbunden. Ebenso ist ein Zulassungsstellen-Computer 44 mit einem Durchzugsleser 16 und einer Eingabetastatur 42 ausgerüstet. Der Zentral-Computer 43 und der Zulassungsstellen-Computer 44 sind auch mit nicht dargestellten Monitoren ausgerüstet. Der Zentral-Computer 43, beispielsweise in der Kraftfahrzeugzulassungsstelle in Flensburg kann über Leitungen 46 bzw. Funkenstrecken 41 mit einer beliebigen Anzahl Zulassungsstellen-Computer 44 verbunden sein. Beide Computer können zur Erstellung von Datenträgern, vorzugsweise von Magnetkarten 45 dienen. Sie sind so miteinander verbunden, daß die Daten einer im Zentral-Computer 43 erstellte Magnetkarte auch in dem zugehörigen Zulassungsstellen-Computer 44 gespeichert werden. Umgekehrt ist das Verfahren ebenso möglich.

In jedem Kraftfahrzeug ist ein Bord-Computer 15 mit einer Eingabetastatur 21 und einem Durchzugsleser 16 installiert. Über die Eingabetastatur 21 können die erforderlichen Daten in den Bord-Computer 15 eingegeben werden.

Fig. 5c zeigt einen Kontroll-Computer 40 mit einem Monitor 39, einer Eingabetastatur 42 und einem Durchzugsleser 16. Ein derartiger Kontroll- Computer 40 kann beispielsweise von Streifenwagen der Polizei mitgeführt werden. In ihn lassen sich täglich die akuten Fahndungsdaten oder die Daten beispielsweise über gestohlene Kraftfahrzeuge eingeben. Bei der Fahrzeugkontrolle braucht nur die zugehörige Magnetkarte des Fahrzeuges durch den Durchzugsleser 16 geschickt werden, wonach auf dem Monitor 39 in optisch lesbarer Form die Angaben von der Magnetkarte sichtbar werden. Hierdurch erleichtert sich wesentlich die bisherige Personenkontrolle.

Die Fig. 6 und 7 zeigen Beispiele von Magnet- karten, wie Sie in Verbindung mit der Anordnung zum Einsatz kommen können. Fig. 6a zeigt eine Magnetkarte 45 mit einer im Rechteck angeordneten Magnetspur 47, die einen Raum 48 für ein Foto z.B. des Kfz-Halters umschließt. Die Abmessungen der in Fig. 6a dargestellten Magnetkarte 45 sind auf die verwendeten Durchzugsleser 16 abgestimmt.

Fig. 6b zeigt eine weitere Magnetkarte 45 mit Magnetspuren 47 zur Spreicherung von Daten.

Fig. 7 schließlich zeigt ein weiteres Ausführungsbeispiel einer Magnetkarte 45 mit Magnetspuren 47. Es versteht sich, daß für alle zuvor angegebenen Magnetkarten entsprechende Durchzugsleser zum Einsatz kommen.

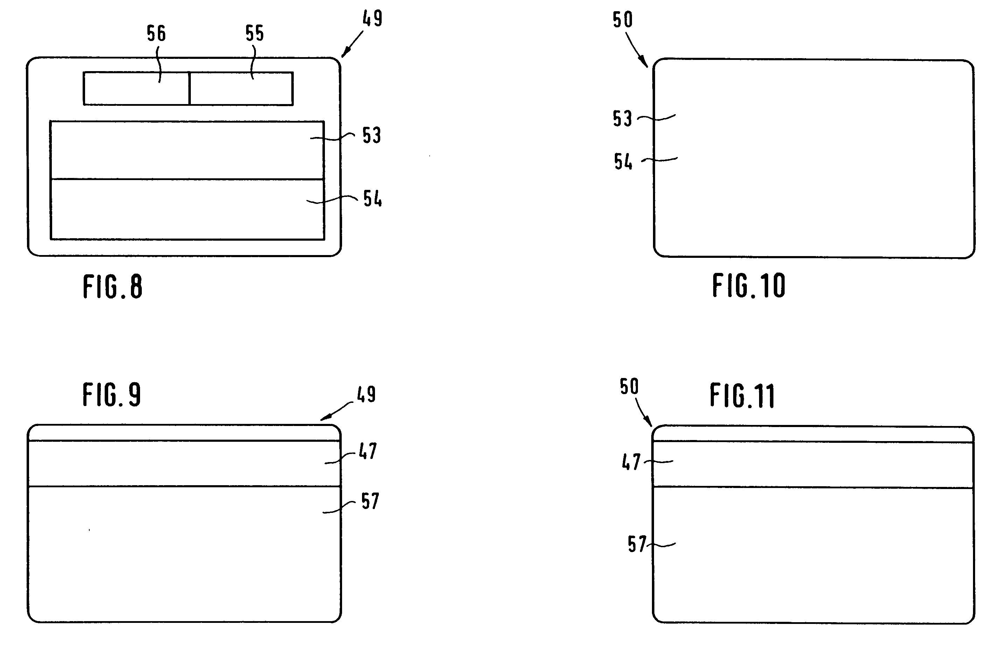

Die Fig. 8 bis 15 zeigen im wesentlichen vier unterschiedliche Magnetkarten 49 bis 52, die in Verbindung mit der neuen Anordnung zum Einsatz kommen.

Der erste, beispielsweise als Magnetkarte ausgebildete Datenträger 49 weist einen Speicherplatz 55 für einen Aktivierungsbefehl und einen Speicherplatz 56 für ein Erkennungssignal auf. Stimmt beispielsweise das Erkennungssignal des Speicherplatzes 56 nicht mit dem im Bord-Computer gespeicherten Erkennungssignal überein, wird Alarm gegeben. Die Anordnung kann nicht aktiviert werden. Erst wenn der Bord-Computer das richtige Erkennungssignal vom Platz 56 erkennt, kann ein Aktivierungsbefehl vom Speicherplatz 55 die Anordnung, insbesondere beide elektronischen Kennzeichenschilder 2 und 3 aktivieren.

Weiterhin sind auf dem Datenträger 49 Speicherplätze 53 für Kraftfahrzeugdaten sowie Speicherplätze 54 für die Daten der "berechtigten Person" gespeichert. Zu den Kraftfahrzeugdaten gehören beispielsweise das Kennzeichen, der Fahrzeugtyp und die Art des Fahrzeuges, der Hersteller, die Anzahl der Sitzplätze, die Anhängelast bzw. die Stützlast. Auf diesem Speicherplatz können auch das Zulassungsdatum sowie Raum für technische Nachtragsangaben bzw. Änderungen vorgesehen sein. Auf dem Speicherplatz 54 sind Name und Anschrift, Geburtsdatum des Kfz-Halters sowie die Anzahl der Besitzer bzw. Vorbesitzer aufgezeichnet. Die Vorderseite der in Fig. 8 dargestellten Karte trägt dem nach alle Daten, die der bisherige Kraftfahrzeugschein aufnahm.

Fig. 9 zeigt die Rückseite der in Fig. 8 dargestellten Karte 49. Unterhalb einer Magnetspur 47, die dreispurig sein kann und die als Speicherplatz 57 für Kontrolldaten dienen kann, steht Raum für Daten zur Verfügung, die sichtbar aufgedruckt sind. Diese sichtbaren Daten werden von einem speziellen Drucker aufgebracht, wenn dieses erforderlich sein sollte. In der Regel ist der Prototyp einer Magnetkarte 49 mit diesen sichtbaren Daten nicht ausgerüstet.

Fig. 10 zeigt die Vorderseite des zweiten Datenträgers 50 in Form einer Magnetkarte. Diese Vorderseite dient zur Aufnahme der ASU-Nummer, der Inhaberdaten und der Kartengültigkeit aufgeschlüsselt nach Monat und Jahr. Diese Daten können beispielsweise mittels des Kontroll-Computers 40 auf dem Monitor 39 sichtbar gemacht werden.

Fig. 11 stellt die Rückseite des zweiten Datenträgers 50 dar. Außer einer Magnetspur 47 enthält die Rückseite Raum für ASU-Einstelldaten. Auch diese Daten sind beispielsweise auf dem Monitor 39 eines Kontroll-Computers 40 darstellbar.

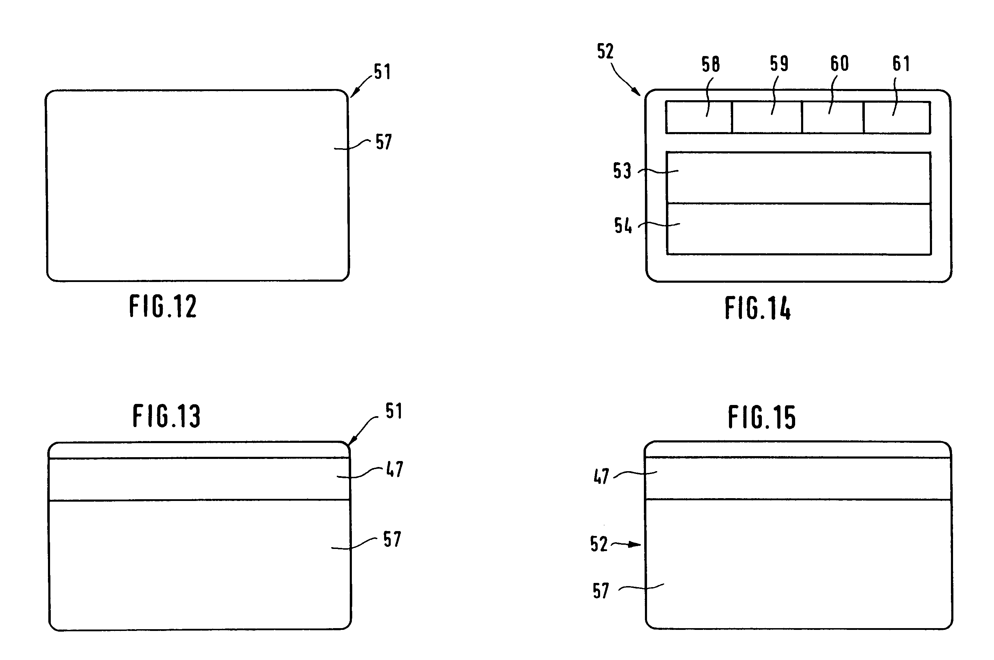

Der dritte Datenträger 51, dessen Vorderseite in Fig. 12 dargestellt ist, enthält alle Daten über Hauptuntersuchungen. Wichtig sind Hauptuntersuchungen HU-Prüfstellen-Nummer, die Daten der berechtigten Person sowie Angaben über die Kartengültigkeit (Monat bzw. Jahr). Die Rückseite der dritten Karte 51 ist in Fig. 13 angedeutet. Außer einer Magnetspur 47 sind Speicherplätze 57 für Kontrolldaten vorgesehen. Hierkann auch, wie übrigens auf der Rückseite der in Fig. 11 dargestellten Karte, ein Foto des Berechtigten angeordnet werden.

Fig. 14 und 15 schließlich zeigen die Vorder-und Rückseite eines vierten Datenträgers 52. Auf der in Fig. 14 dargestellten Vorderseite sind Speicherplätze 58 bis 61 für einen Löschungsbefehl Kennzeichenschild, Löschungsbefehl Bord-Computer, Löschungsbefehl Computer-Zulassungsstelle und Löschungsbefehl für den Zentral-Computer vorgesehen. Außerdem trägt die Vorderseite Speichersplätze 53 bzw. 54, für Kraftfahrzeugdaten und die Daten einer "berechtigten Person."

Auf der Rückseite ist eine Magnetspur 47 und ein Speicherplatz 57 für Kontrolldaten untergebracht.

Die Kennzeichnungen nach der Erfindung sind bleibende Kennzeichen, die auch bei einem Halter-wechsel nicht ausgetauscht werden, da sie nur mit einem codierten Magnetkarten-Bordcomputer, mit Durchzugsleser angesteuert - also verändert - werden können.

Diese bleibenden Kennzeichen können nur bei einer Zerstörung ausgewechselt werden. Da sie nur über den Bord-computer angesteuert werden und somit ein von der Zulassungsstelle vergebenes Kennzeichen immer nur an einem Fahrzeug zum signalisieren zu bringen ist - bei dem die Daten- übereinstimmung zwischen Bord-Computer und Magnetkarte gegeben ist.

Fälschung und Mißbrauch sind hier ganz und gar ausgeschlossen.

Die Fahrzeug-Hersteller liefern auch anstelle des seitherigen KFz-briefes und KFZ-Scheines - jeweils - vierteilige Magnetkarten-Sets mit, die alle technischen Daten beinhalten.

Diese Karten haben einen zusätzlichen Magnetstreifen frei, welcher bei Zulassung - und nur von den Zulassungsstellen beschreiben oder gelöscht werden kann.

Zwei dieser Magnet-Karten übernehmen die Rolle des seitherigen Fahrzeugbriefes - zwei die des Fahrzeugscheines. Eine der beiden Magnetkarten verbleibt bei der Zulassungsstelle. nämlich die mit einer Codierung versehene. In den ersten beiden Karten wird noch die Anzahl der Fahrzeughalter verschlüsselt mit alphabetischen Ziffern und Zahlen oder Spezialzeichen festgehalten.

Auf diesen beiden Magnet-Karten kann dann nur von den Zulassungsstellen ein neuer Halter bzw. ein Standort-Wechsel eingeschrieben werden.

Ein Fahrzeug wird stillgelegt indem der Fahrzeughalter seine beiden Magnet-Karten mit zu der Zulassungsstelle nimmt. Hier wird nun seine Fahrzeugschein-Ersatz-Karte mit dem der Zulassungsstelle bekannten Code die Nummer des amtlichen Kennzeichens gelöscht und mit der gleichen Karte das amtliche Kennzeichen über den Bord-Computer gelöscht - von behördlicher Seite.

Anschließend - nachdem auch die Stillegung in der Kraftfahrzeugbrief-Karte registriert ist, verbleibt die Halterfahrzeugschein-Karte bei der Zulassungsstelle.

Diese kann dann bei einer Wiederanmeldung oder einem Halter-Wechsel aufgrund die ihr vorliegenden Karten neu aufbauen, nachdem man die Halter- oder Besitzer-Brief-Magnetkarte vorgelegt hat.

Da nun alle Zulassungsstellen-Computer - mit dem Zentral-Computer in Flensburg über Kabel oder Funk gekoppelt sind, werden auch mit jeder Zulassung oder Stillegung - alle Daten sofort abgespeichert.

Mit der ASU-Magnetkarte kann von jedem ASU-Berechtigtem inkl. den Zulassungsstellen die ASU-Anzeige signalisiert oder verändert werden.

Dies gilt auch für die TÜV-Magnetkarte.

Mit der vierten Magnetkarte können über die Zulassungsstellen oder die Polizei, wenn nötig, Still- oder Abmeldungen vollzogen werden.

Ausgegeben und ver sandt werden die
1. ASU-Karten über Kreishandwerkerschaften des KFZ-Gewerbes und der Handwerkskammer,
2. TÜV-oder HU-Karten über den Techn. Überwachungsverein und seiner Nebenstellen,
3. Stillege-Karten über die Zulassungsstellen.

Eine allgemeine Verkehrskontrolle wird mit stationären - oder tragbaren Kontrollgeräten - mit Monitor - durchgeführt. Der Polizei wird also über den Monitor signalisiert, was die Magnet-Karte beinhaltet. Ist ein Grund vorhanden, die Daten zu überprüfen, so druckt der Beamte sich diese über seinen im Streifenwagen stationierten Drucker aus.

Sind Vergleichsdaten notwendig, so fordert der Beamte diese über Funk bei den Zulassungsstellen an. Ein Vergleich dieser Daten mit den Daten auf dem ausgedruckten Streifen kann vor Ort vorgenommen werden.

Den Vertrieb der elektrischen Kennzeichen übernehmen die bisherigen KFZ-Schilder Prägestationen.

## Patentansprüche

1. Anordnung zur Kennzeichnung, zentralen Registrierung sowie Überprüfung von Kraftfahrzeugen mit wenigstens einem elektronischen Kennzeichenschild (2, 3), welches mit dem Kraftfahrzeug (1) in mechanisch fester Verbindung steht und welches an einen Bordcomputer (15) im Kraftfahrzeug (1) mit einem Leser (16) für Datenträger (49 bis 52) angeschlossen ist, deren Codierung zur Ein- und Ausschaltung zumindest der elektronischen Kennzeichenschilder (2, 3) einsetzbar ist, dadurch gekennzeichnet, daß der Datenträger (49 bis 52) außer als Schaltelement zugleich als Bestandteil eines Kraftfahrzeug-Registriersystems bestehend aus miteinander in Wirkverbindung stehenden Zentral-Computer (43), Zulassungsstellen-Computer (44) und/oder Kontroll-Computer (40) in Streifenfahrzeugen sowie dem Bord- Computer (15) im Kraftfahrzeug (1) verwendbar ist und innerhalb dieses Systems in Übereinstimmung mit den Daten des Kraftfahrzeuges (1) nach Art eines Kraftfahrzeugbriefes oder Kraftfahrzeugscheines erstellbar, lesbar, abwandelbar und registrierbar ist.

2. Anordnung nach Anspruch 1, gekennzeichnet durch einen ersten Datenträger (49), der zusätzliche Speicherplätze (54, 55) zur Aufnahme von Codierungen für Kenndaten für eine "berechtigte Person" bei einer Behörde bzw. einer Zulassungsstelle sowie eines Aktivierungsbefehls zur Vollaktivierung wenigstens des elektronischen Kennzeichenschildes (1, 2) einschließt.

3. Anordnung nach den Ansprüchen 1 und 2, gekennzeichnet durch einen zweiten Datenträger, der zusätzlich zu den Speicherplätzen (53, 54, 55) des ersten Datenträgers (49) Speicherplätze (56) zur Aufnahme von Codierungen für wenigstens ein Erkennungssignal, z.B. zum Einschalten eines Bord-Computers im Kraftfahrzeug, einschließt.

4. Anordnung nach den Ansprüchen 1 und 2, gekennzeichnet durch einen dritten Datenträger (51), der außer Speicherplätzen (54) zur Aufnahme der Codierungen für Kenndaten für die "berechtigte Person" bei einer Behörde bzw. Zulassungsstelle zusätzliche Speicherplätze (58) zur Aufnahme von Codierungen für Befehle zur Löschung von Anzeigefeldern (27) auf den Kennzeichenschildern (2, 3) einschließt.

5. Anordnung nach den Ansprüchen 1 bis 4, dadurch gekennzeichnet, daß der erste Datenträger (49) zusätzliche Speicherplätze (57) zur Aufnahme von Codierungen für Kontrolldaten, z.B. für HU- und/oder ASU-Anzeigen (33, 34) und/oder zum Schalten entsprechender Anzeigeelemente auf den elektronischen Kennzeichenschildern bzw. von Signalen zum Einschalten von Anzeigeeinrichtungen im Innern des Kraftfahrzeuges aufweist.

6. Anordnung nach den Ansprüchen 1 bis 5, gekennzeichnet durch einen vierten Datenträger (52), der außer Speicherplätzen (54) zur Aufnahme von Codierungen für Daten für die "berechtigte Person" einer Behörde bzw. Zulassungsstelle Speicherplätze (56, 60, 61) zur Aufnahme von Codierungen für Befehle wenigstens zur Teillöschung der Daten des Bord- Computers (15) und/oder des Zentral-Computers (43) bzw. des Zulassungsstellen-Computers (46) einschließt.

7. Anordnung nach den Ansprüchen 1 bis 6, dadurch gekennzeichnet, daß der Bord-Computer (15), der Zentral-Computer (43) bzw. der Zulassungsstellen-Computer (44) und die Karten- leser (16) so geschaltet sind, daß durch einen gegenüber den gespeicherten Daten falsch codierter Datenträger (49 - 52) in den Computern (15, 43, 44) Alarm auslösbar ist.

8. Anordnung nach den Ansprüchen 1 bis 7, dadurch gekennzeichnet, daß die Datenträger (49 - 52) als Magnetkarten (Smartkarten 45) und die Kartenleser der Computer (15, 43, 44) als Datenträger-Leser (Magnetkarten-Durchzugsleser 16) mit Zusatztastatur ausgebildet sind.

9. Anordnung nach den Ansprüchen 1 bis 8, dadurch gekennzeichnet, daß zumindest der Zentral-Computer (43) mit einer durch einen Schlüssel beeinflußbaren Codierstation zum Ein- und Abschalten der Betriebsspannung ausgerüstet ist.

10. Anordnung nach den Ansprüchen 1 bis 9, dadurch gekennzeichnet, daß der Bord-Computer (15) von einem 220 V-Netz und/oder von einer Batteriespannung betreibbar ist.

11. Anordnung nach den Ansprüchen 1 bis 10, dadurch gekennzeichnet, daß für die Anzeigefelder (27) der Kennzeichenschilder (2, 3) Flüssigkeitskristall- bzw. LED-Anzeigeelemente verwendet werden.

12. Anordnung nach den Ansprüchen 1 bis 11, dadurch gekennzeichnet, daß der Bord-Computer (15) fest mit dem Armaturenbrett (4) des Kraftfahrzeuges (1) verbunden ist.

13. Anordnung nach den Ansprüchen 1 bis 11, dadurch gekennzeichnet, daß der Bord-Computer (15) fest zwischen den Vordersitzen angeordnet, vorzugsweise fest mit der Mittelkonsole (5) des Kraftfahrzeuges (1) verbunden ist.

14. Anordnung nach den Ansprüchen 1 bis 11, dadurch gekennzeichnet, daß der Bord-Computer (15) fest mit einer Tür (6), vorzugsweise mit der Fahrertür des Kraftfahrzeuges (1) verbunden ist.

15. Anordnung nach den Ansprüchen 1 bis 11, dadurch gekennzeichnet, daß der Bord-Computer (15) fest mit dem Kraftfahrzeugdach (7) verbunden ist.

16. Anordnung nach den Ansprüchen 1 bis 15, dadurch gekennzeichnet, daß der Kartenleser als Durchzugsleser (16) ausgebildet ist.

17. Anordnung nach Anspruch 16, dadurch gekennzeichnet, daß der Kartenleser (16) fest mit dem Armaturenbrett (4) des Kraftfahrzeuges (1) verbunden ist.

18. Anordnung nach Anspruch 16, dadurch gekennzeichnet, daß der Kartenleser (16) fest zwischen den Vordersitzen angeordnet, vorzugsweise fest mit der Mittelkonsole (5) des Kraftfahrzeuges (1) verbunden ist.

19. Anordnung nach Anspruch 16, dadurch gekennzeichnet, daß der Kartenleser (16) fest mit einer Tür (6), vorzugsweise der Fahrertür des Kraftfahrzeuges (1) verbunden ist.

20. Anordnung nach den Ansprüchen 16 bis 19, dadurch gekennzeichnet, daß ihre Bestandteile am Stromversorgungsteil (8) angeschlossen sind, das über einen Batterieanschluß (9) mit der Kraftfahrzeugbatterie und/oder über einen Fremdspannungsanschluß (10) an eine gesonderte Stromversorgung angeschlossen sind.

21. Anordnung nach den Ansprüchen 16 bis 20, dadurch gekennzeichnet, daß jedes Kennzeichenschild (2, 3) innerhalb eines Gehäuses (22) aus einer LCD bzw. LED-Platte aus Kunststoff besteht, die hinterseitig schwarz getönt und vorderseitig klarsichtig sowie blank und spiegelfrei ausgebildet ist.

22. Anordnung nach Anspruch 21, dadurch gekennzeichnet, daß jedes Kennzeichenschild (2, 3) LED-Elemente einschließt, und daß durch diese außer den Ziffern 0 bis 9 und den Buchstaben A bis Z auch Sonderbenennungen (chinesische Schriftzeichen oder dergl.) darstellbar sind.

23. Anordnung nach den Ansprüchen 21 und 22, dadurch gekennzeichnet, daß die Größe der Kennzeichenschilder (2, 3) der Größe bisheriger Kraftfahrzeugkennzeichen mit einer Länge etwa 520 mm, einer Höhe von etwa 110 mm und einer Dicke von etwa 20 bis 25 mm entspricht.

24. Anordnung nach einem oder mehreren der Ansprüche 1 bis 23, dadurch gekennzeichnet, daß der Zentral-Computer (43) und die Zulassungsstellen-Computer (44) über Leitungen und/oder Funkstrecken (41) oder dergleichen miteinander gekoppelt sind.

25. Anordnung nach den Ansprüchen 1 bis 24, gekennzeichnet durch einen Kontroll-Computer (40) mit Monitor (39) für Streifenwagen oder dergl., der zumindest mit einem Zulassungsstellen-Computer (44) koppelbar und durch den der Inhalt eines Datenträgers (49 - 52) optisch lesbar darstellbar ist.

## Claims

1. Arrangement for the identification, central registration and checking of motor vehicles with at least one electronic identification plate (2, 3) which stands in mechanically fixed connection with the motor vehicle (1) and which is connected to an on-board computer (15) in the vehicle with a reader (16) for data carriers (49 to 52), the coding of which is settable for the switching-on and switching-off at least of the electronic identification plate (2, 3), characterised thereby that the data carrier (49 to 52) is usable, apart from as a switching element, also as a component of a motor vehicle registration system consisting of operatively interconnected central computer (43), licensing office computer (44) and/or check computer (40) in patrol vehicles as well as the on-board computer in motor vehicles and is settable up, readable, variable and registrable within this system in correspondence with the data of the motor vehicle (1) according to the type of a motor vehicle document or motor vehicle registration certificate.

2. Arrangement according to claim 1, characterised by a first data carrier (49), which includes additional storage places (52, 54) for reception of codings for characterising data for an "authorised person" at an authority or a licensing office as well as an activation command for the full activation at least of the electronic identification plate (1, 2).

3. Arrangement according to claims 1 and 2, characterised by a second data carrier, which in addition to the storage places (53, 54, 55) of the first data carrier (49) includes storage places (56) for reception of codings for at least one recognition signal, for example for the switching-on of an on-board computer in the motor vehicle.

4. Arrangement according to claims 1 and 2, characterised by a third data carrier (51), which apart from storage places (54) for reception of codings for characterising data for an "authorised person" at an authority or a licensing office includes additional storage places (58) for reception of codings for commands for extinguishing of display fields (27) on the identification plate (2, 3).

5. Arrangement according to claims 1 to 4, characterised thereby that the first data carrier (49) has additional storage places (57) for reception of codings for checking data, for example for master checking and exhaust gas probe checking (33, 34) and/or for the switching of corresponding indicating elements on the electronic identification plate or of signals for the switching-on of indicating devices in the interior of the motor vehicle.

6. Arrangement according to claims 1 to 5, characterised by a fourth data carrier (52), which apart from storage places (54) for reception of codings for characterising data for an "authorised person" at an authority or a licensing office includes storage places for reception of commands at least for the partial extinguishing of the data of the on-board computer (15) and/or of the central computer (43) or the licensing office computer (46).

7. Arrangement according to claims 1 to 6, characterised thereby that the on-board computer (15), the central computer (43) or the licensing office computer (44) and the card reader are so wired that an alarm can be triggered by a data carrier (49 to 52), which is falsely coded relative to the stored data, in the computers (15, 43, 44).

8. Arrangement according to claims 1 to 7, characterised thereby that the data carriers (49 to 52) are constructed as magnetic cards (smart cards 45) and the card readers of the computers (15, 43, 44) are constructed as data carrier readers (magnetic card swipe-through reader 16) with extra keyboard.

9. Arrangement according to claims 1 to 8, characterised thereby that at least the central computer (43) is equipped with a coding station, which can be influenced by a key, for the switching-on and switching-off of the operating voltage.

10. Arrangement according to claims 1 to 9, characterised thereby that the on-board computer (15) is operable by a 220 mains voltage and/or by a battery voltage.

11. Arrangement according to claims 1 to 10, characterised thereby that liquid crystal or light-emitting diode display elements are used for the display fields (27) of the identification plates (2, 3).

12. Arrangement according to claims 1 to 11, characterised thereby that the on-board computer (15) is fixedly connected with the instrument panel (4) of the motor vehicle (1).

13. Arrangement according to claims 1 to 11, characterised thereby that the on-board computer (15) is fixedly arranged between the front seats, preferably fixed to the centre console (5), of the motor vehicle (1).

14. Arrangement according to claims 1 to 11, characterised thereby that the on-board computer (15) is fixedly connected with a door (6), preferably with the driver's door, of the motor vehicle (1).

15. Arrangement according to claims 1 to 11, characterised thereby that the on-board computer (15) is fixedly connected with the motor vehicle roof (7).

16. Arrangement according to claims 1 to 15, characterised thereby that the card reader is constructed as a swipe-through reader (16).

17. Arrangement according to claims 1 to 16, characterised thereby that the card reader (16) is fixedly connected with the instrument panel (4) of the motor vehicle (1).

18. Arrangement according to claim 16, characterized thereby that the card reader (16) is fixedly arranged between the front seats, preferably fixed to the centre console (5), of the motor vehicle (1).

19. Arrangement according to claim 16, characterised thereby, that the card reader (16) is fixedly connected with a door (6), preferably with the driver's door, of the motor vehicle (1).

20. Arrangement according to claims 16 to 19, characterised thereby that its components are connected to the current supply part (8) which is connected by way of a battery terminal (9) with the motor vehicle battery and/or by way of an external voltage terminal (10) to a separate current supply.

21. Arrangement according to claims 16 to 20, characterised thereby that each identification plate (2, 3) within a motor vehicle (1) consists of a liquid crystal diode, or light-emitting diode, panel of plastics material, which is coloured black at the rear side and transparent as well as blank at the front side and is constructed to be reflection-free.

22. Arrangement according to claim 21, characterised thereby that each identification plate (2, 3) includes light-emitting diode elements and that apart from the numerals 0 to 9 and the letters A to Z also special designations (Chinese characters or the like) can be represented.

23. Arrangement according to one of claims 21 and 22, characterised thereby that the size of the identification plate (2, 3) corresponds to the size of previous vehicle identification plates with a length of about 520 millimetres, a height of about 110 millimetres and a thickness of about 20 to 25 millimetres.

24. Arrangement according to one or more of claims 1 to 23, characterised thereby that the central computer (43) and the licensing office computer (44) are coupled together by way of leads and/or radio paths (41) or the like.

25. Arrangement according to claims 1 to 24, characterised by a check computer (40) with a monitor (39) for patrol cars or the like, which can be coupled at least with a licensing office computer (44) and by which the content of a data carrier (49 to 52) can be represented to be optically readable.

## Revendications

1. Dispositif pour immatriculer, enregistrer de manière centrale et contrôler des véhicules à l'aide d'au moins une place d'immatriculation électronique (2, 3) reliée solidairement au véhicule (1) par une liaison mécanique et raccordée à un ordinateur de bord (15) du véhicule (1) avec un lecteur (16) pour des supports de données (49 à 52), dont le codage peut s'utiliser pour brancher ou couper au moins les plaques minéralogiques électroniques (2, 3), caractérisé en ce que le support de données (49 à 52) est non seulement un élément de commutation mais fait également partie d'un système d'enregistrement de véhicules composé d'au moins un ordinateur central (43), un ordinateur d'agrément (44) et/ou un ordinateur de contrôle (40) dans un véhicule patrouilleur, ordinateurs qui coopèrent, et qui est applicable à l'ordinateur de bord (15) du véhicule (1) et se met en concordance avec les données du véhicule (1) à la manière d'une carte grise, en pouvant être lu, modifié et enregistré.

2. Dispositif selon la revendication 1, caractérisé par un premier support de données (49) qui comporte des emplacements de mémoire (54, 55) supplémentaires pour recevoir les codes de caractéristiques d'une « personne autorisée » par les autorités ou d'un poste ayant l'agrément, ainsi qu'un ordre d'activation pour activer complètement au moins la plaque minéralogique électronique (1, 2).

3. Dispositif selon les revendications 1 et 2, caractérisé par un second support de données qui, en plus des emplacements de mémoire (53, 54, 55) du premier support de données (49), comporte des emplacements de mémoire (56) pour recevoir des codes d'au moins un signal de reconnaissance par exemple pour brancher un ordinateur de bord dans le véhicule.

4. Dispositif selon les revendications 1 et 2, caractérisé par un troisième support de données (51) qui en plus des emplacements de mémoire (54) pour recevoir les codes des caractéristique de la « personne autorisée » auprès des autorités ou d'un poste agréé, comporte en outre des emplacements de mémoire (58) pour recevoir les ordres d'effacement des champs d'affichage (27) sur les plaques minéralogiques (2, 3).

5. Dispositif selon les revendications 1 à 4, caractérisé en ce que le premier support de données (49) comporte des emplacements de mémoire (57) supplémentaires pour recevoir des codes de données de contrôle par exemple pour les signes HU et/ou ASU (33, 34) et/ou pour commuter des éléments d'affichage correspondants sur les plaques minéralogiques électroniques, ou de signaux de mise en marche des dispositifs d'affichage à l'intérieur du véhicule automobile.

6. Dispositif selon les revendications 1 à 5, caractérisé par un quatrième support de données (52) qui, en plus des emplacements de mémoire (54) pour recevoir des codes de données de la « personne autorisée » auprès d'une autorité ou d'un poste agréé, comporte les emplacements de mémoire (56, 60, 61) pour recevoir des codes pour des ordres d'au moins un effacement partiel des données de l'ordinateur de bord (15) et/ou de l'ordinateur central (43) ou de l'ordinateur (46) du poste agréé.

7. Dispositif selon les revendications 1 à 6, caractérisé en ce que l'ordinateur de bord (15), l'ordinateur central (43) et l'ordinateur du poste agréé (44) et les lecteurs de carte (16) sont branchés pour qu'un support de données (49 - 52) contenant des codes erronés par rapport aux données mises en mémoire déclenche une alarme dans les ordinateurs (15, 43, 44).

8. Dispositif selon les revendications 1 à 7, caractérisé en ce que les supports de données (49 à 52) sont des cartes magnétiques (cartes privilégiées) (45), et les lecteurs de carte des ordinateurs (15, 43, 44) sont des lecteurs de supports de données (lecteurs de cartes magnétiques à passage) (16), avec un clavier d'accès.

9. Dispositif selon les revendications 1 à 8, caractérisé en ce qu'au moins l'ordinateur central (43) est équipé d'un poste de codage qui peut être influencé par une clé pour brancher ou couper la tension de fonctionnement.

10. Dispositif selon les revendications 1 à 9, caractérisé en ce que l'ordinateur de bord (15) est alimenté à partir d'un réseau de 220 volts et/ou d'une tension de batterie.

11. Dispositif selon les revendications 1 à 10, caractérisé en ce que pour les champs d'affichage (27) des plaques minéralogiques (2, 3) on utilise des éléments d'affichage à cristaux liquides ou à LED.

12. Dispositif selon les revendications 1 à 11, caractérisé en ce que l'ordinateur de bord (15) est relié solidairement au tableau de bord (4) du véhicule automobile (1).

13. Dispositif selon les revendications 1 à 11, caractérisé en ce que l'ordinateur de bord (15) est monté entre les sièges avant, de préférence avec la console centrale (5) du véhicule (1).

14. Dispositif selon les revendications 1 à 11, caractérisé en ce que l'ordinateur de bord (15) est relié solidairement à une portière (16) de préférence à la portière du conducteur du véhicule (1).

15. Dispositif selon les revendications 1 à 11, caractérisé en ce que l'ordinateur de bord (15) est relié solidairement au toit (7) du véhicule.

16. Dispositif selon les revendications 1 à 15, caractérisé en ce que le lecteur de carte est un lecteur à passage (16).

17. Dispositif selon la revendication 16, caractérisé en ce que le lecteur de carte (16) est relié solidairement au tableau de bord (4) du véhicule (1).

18. Dispositif selon la revendication 16, caractérisé en ce que le lecteur de carte (16) est monté solidairement entre les sièges avant en étant relié de préférence solidairement à la console centrale (5) du véhicule automobile (1).

19. Dispositif selon la revendication 16, caractérisé en ce que le lecteur de carte (16) est relié solidairement à une portière (6), de préférence à la portière du conducteur du véhicule (1).

20. Dispositif selon les revendications 16 à 19, caractérisé en ce que ses composants sont reliés au réseau d'alimentation électrique (8) qui est raccordé par un branchement de batterie (9) à la batterie du véhicule et/ou par un raccord de tension extérieur (10) pour un branchement sur une alimentation particulière.

21. Dispositif selon les revendications 16 à 20, caractérisé en ce que chaque plaque minéralogique (2, 3) est logée à l'intérieur d'un boîtier (22) et se compose d'une plaque à cristaux liquides LCD ou à diodes électroluminescentes LED, cette plaque est en matière synthétique dont la face arrière est teintée de noir et dont la face avant est transparente vierge et sans reflet.

22. Dispositif selon la revendication 21, caractérisé en ce que chaque plaque d'immatriculation (2, 3) comprend des éléments LED et en ce que ces éléments permettent d'afficher non seulement les chiffres de 0 à 9 et les lettres de A à Z mais également des dénominations particulières (par exemple des caractères chinois ou analogues).

23. Dispositif selon les revendications 21 et 22, caractérisé en ce que la dimension des plaques minéralogiques (2, 3) correspond sensiblement à la dimension des plaques minéralogiques actuelles d'un véhicule, d'une longueur de l'ordre de 520 mm, d'une hauteur d'environ 110 mm et d'une épaisseur comprise entre 20 et 25 mm.

24. Dispositif selon l'une ou plusieurs des revendications 1 à 23, caractérisé en ce l'ordinateur central (43) et l'ordinateur de poste agréé (44), sont couplés par des lignes et/ou des transmissions radio (41) ou analogues.

25. Dispositif selon les revendications 1 à 24, caractérisé par un ordinateur de contrôle (40) avec un moniteur (39) pour le véhicule patrouilleur ou analogue, qui peut être couplé à au moins un ordinateur de poste agréé (44) permettant d'afficher d'une manière optiquement lisible le contenu du support de données (49 à 52).
